# EUROPEAN PATENT APPLICATION

(11) **EP 3 499 634 A1**
(43) Date of publication of application: **19.06.2019**
(21) Application number: 17209938.4
(22) Date of filing: 22.12.2017
(51) Int. Cl.: H01M 10/625, H01M 10/6568, H01M 10/6569, H01M 10/617, B60H 1/00, H01M 10/48, H01M 10/663

(54) **BATTERY THERMAL MANAGEMENT SYSTEM FOR A VEHICLE**

(30) Priority: 14.12.2017 EP 17207448
(71) Applicant: Mahle International GmbH, 70376 Stuttgart (DE)
(72) Inventor: Ayad, Fadil, 57685 Augny (FR)
(74) Representative: BRP Renaud & Partner mbB Rechtsanwälte Patentanwälte Steuerberater

(57) **Abstract**

The present invention relates to a battery thermal management system (1) for a vehicle with at least one battery unit (10). The battery thermal management system (1) comprises a first fluid circuit (2) and a second fluid circuit (3) being thermally connected by at least one heat exchanger (4). Within the first fluid circuit (2) is a two-phase first refrigerant used to cool and/or heat the battery unit (10), said battery unit (10) is at least partially in thermal contact with the first refrigerant (5) which is in a liquid state or at least partially in a liquid state. The battery unit (10) acts as an evaporator and transfers its heat energy to the first refrigerant (5) converting it at least into a two-phase state. Subsequently, the first refrigerant (5) of the first fluid circuit (2) is condensed in the heat exchanger (4) while the second refrigerant (6) of the second fluid circuit (3) is evaporated.

## Description

The present invention relates to a battery thermal management system for a vehicle with at least one battery unit.

Vehicles with a hybrid or electric drive use at least one battery unit in the form of a rechargeable accumulator to store energy. Such battery units usually comprise many battery cells and in most cases lithium-ion accumulators are used as battery cells. Since lithium-ion accumulators are temperature sensitive and can only be operated optimally in a certain temperature range, a battery thermal management system is required.

During operation of the hybrid or electric vehicle, the temperature of the battery unit increases and must always be kept below 40°C to prevent an early ageing or even destruction of the battery unit. At temperatures below 15°C, the battery power decreases due to increasing internal resistance. Consequently, during operation of a hybrid or electric vehicle, the temperature of the battery unit must be maintained between approximatively 15-40°C during operation. Operation of the battery unit below 0°C causes damage to the battery cells and consequently leads to a significant reduction in the service life of the battery unit so that such a condition must be avoided.

In addition, the heating and/or cooling system of the battery unit must ensure that the temperature distribution is as homogeneous as possible. A temperature gradient within a battery cell or a temperature difference between the individual battery cells leads to differences in the charging and discharging processes and thus to different aging of the cells as well as to a reduced efficiency of the entire battery unit.

Stabilizing the temperature of the battery unit within the specified temperature range and achieving a homogeneous temperature distribution is a challenge, as the battery unit heats up considerably due to the high electrical power requirement. This effect also occurs, for example, during quick charging.

Typical modern battery thermal management systems use a refrigerant that flows through the battery unit at a controlled temperature and flow rate, with the refrigerant not being in direct contact with the battery cells, but flowing through cooling channels of cooling plates located between the battery cells since the used coolant is electrically conductive. When the battery unit needs to be cooled down, the coolant is cooled down by an A/C system of the vehicle via a coolant-to-refrigerant heat exchanger. In order to heat up the battery unit, the coolant is warmed by another liquid-to-liquid heat exchanger or by an electrical heater. These battery thermal management systems have the disadvantage that if the cooling plate leaks, a short circuit occurs inside the battery unit and destroys it. Another disadvantage is that the heat exchange between the coolant and the battery cells is reduced by the cold plates. Additionally, the homogeneity of the temperature distribution inside the battery unit is not guaranteed especially at high heat dissipation of the battery since the coolant temperature rises along the battery cells. Finally, the coolant viscosity is high at low temperature which requires more pumping power.

Another type of temperature system cools the battery unit directly via the vehicle's A/C system, using a non-conductive refrigerant such as R134a or R1234y in the A/C system. As this prevents short circuits, direct contact between the refrigerant and the battery unit is possible. The liquid refrigerant first flows through an expansion valve and then passes into a two-phase state. The refrigerant absorbs the heat dissipated by the battery cells and the vapor portion increases. The disadvantage of this system is that the refrigerant is supplied to the battery unit in a two-phase state, which makes it difficult to distribute the refrigerant uniformly. An inhomogeneous distribution of the refrigerant in turn leads to an inhomogeneous temperature distribution in the battery unit. Additionally, the temperature of the refrigerant entering the battery unit is relatively low (around 5°C) which can cause thermal shocks with the hot battery cells resulting in a damage of the battery unit.

US 2016/0298883 A1 discloses a two-phase evaporative cooling system used to cool down different types of electronic components. With this cooling system, the refrigerant is supplied to an electronic component in a liquid state providing a homogeneous distribution of the refrigerant. By absorbing the heat energy of the electronic component, the liquid refrigerant is converted into a two-phase state. It then flows to a condenser that can be cooled by water or air. There, the refrigerant condenses and releases the previously absorbed heat energy. The application of this cooling system with a water-cooled condenser inside a vehicle is not possible. The use of an air-cooled condenser in a vehicle is also not possible since the temperature of the battery unit has to be maintained below 35°C. In this case, the refrigerant saturation temperature will be around 30°C. At this temperature, the ambient air temperature must not exceed 20 °C to guarantee an efficient heat rejection of the refrigerant through the condenser. In addition, the system cannot heat up the battery unit when necessary.

The present invention is based on the task of specifying a battery thermal management system for a vehicle which improves the homogeneity of the temperature distribution of the battery unit.

This problem is solved according to the invention by the subject matter of the independent claims. Advantageous embodiments are the subject matter of the dependent claims.

The present invention is based on the general concept of suppling a liquid refrigerant to the battery unit while the refrigerant in the two-phase state condenses in a heat exchanger.

The innovative battery thermal management system for a vehicle comprises a first fluid circuit and a second fluid circuit being thermally connected by at least one heat exchanger. Within the first fluid circuit is a two-phase first refrigerant while within the second fluid circuit is a two-phase second refrigerant.

At least one electrically driven conveying unit is fluidically connected to the first fluid circuit for driving the first refrigerant within the first fluid circuit. At least one electrically driven conveying unit is fluidically connected to the second fluid circuit for driving the second refrigerant within the second fluid circuit. The components of the battery thermal management system may be fluidically connected by fluid lines and the conveying units may be fluid pumps.

The second fluid circuit comprises at least one expansion valve which is arranged between the conveying unit and the heat exchanger. The expansion valve may be located closer to the heat exchanger than to the conveying unit of second fluid circuit. The expansion valve may be an electronic expansion valve. Depending on the flow direction of the second refrigerant, the heat exchanger acts as an evaporator or condenser for the second refrigerant.

At least one battery unit of the vehicle is fluidically connected to the first fluid circuit and said battery unit is arranged downstream of the conveying unit and upstream of the heat exchanger. The battery unit is at least partially in thermal contact with the first refrigerant.

The battery thermal management system comprises an operation mode during which the first refrigerant within the first fluid circuit is in a liquid state or at least partially in a liquid state between the conveying unit and the battery unit. The battery unit acts as an evaporator and transfers its heat energy to the first refrigerant converting it at least into a two-phase state. Subsequently, the first refrigerant of the first fluid circuit is condensed in the heat exchanger while the second refrigerant of the second fluid circuit is evaporated. In order to perform this or other operation modes, the battery thermal management system preferably is provided with at least one control unit designed and/or programmed to operate the battery thermal management system according to said operation mode and/or other operation modes.

The battery unit comprises several battery cells which may be arranged in a battery housing that may comprise two flanges. The battery housing can be fluidically connected to the first fluid circuit by means of the two flanges.

Inside the battery unit, the first refrigerant can either be in direct contact with the battery cells either or it flows inside cooling channels of cooling plates that may be located between the battery cells to separate the first refrigerant and the battery cells. In the case of a direct contact between the battery cells and the first refrigerant, an electrically non-conductive, two-phase first refrigerant is used. The battery cells may be totally or partially immersed in the first refrigerant. The second refrigerant can be the same or different as the first refrigerant used in the first fluid circuit.

Since the refrigerant at the entrance of the battery unit is in a liquid state or at least partially in a liquid state in which the liquid portion predominates, the homogeneity of the distribution of the first refrigerant in the battery unit is improved re-suiting in a more homogeneous temperature distribution of the battery unit. Additionally, thermal shocks in the battery unit are avoided.

According to a preferred embodiment the risk of thermal shocks is further reducen, when during the normal and intended operation of the system the inlet temperature of the first refrigerant at the entrance of the battery unit is higher than 10°C. The temperature of the first refrigerant may be between 20°C and 30°C and/or between 23°C and 27°C.

While the first refrigerant flows along the battery unit, it absorbs the heat released by the battery cells rising its temperature till reaching the saturation. Then, the first refrigerant starts to evaporate. The refrigerant leaves the battery unit fully vaporized or still in a two-phase state. Since the first refrigerant is subjected to a phase change from liquid to vapor, its temperature remains constant, if its pressure is stable. This ensures a homogeneous cooling of the individual battery cells along the entire battery unit.

Subsequently, the first refrigerant of the first fluid circuit is condensed in the heat exchanger while the second refrigerant of the second fluid circuit is evaporated. There, the first refrigerant releases the previously absorbed heat energy of the battery cells which is used by the second refrigerant to vaporize. In the second fluid circuit, the flow direction of the second refrigerant is set in such a way that the second refrigerant first flows through the expansion valve and then through the heat exchanger. Thus, heat exchanger acts as an evaporator for the second refrigerant. A control unit may be used to operate the battery thermal management system, said control unit being designed and/or programmed in such a way that it controls/operates the system in the described manner.

In an advantageous development of the solution according to the invention, the battery unit is at least partially in direct contact with the first refrigerant having a boiling pressure below 2 bar at a temperature of 30°C. The boiling pressure of the first refrigerant at a temperature of 30°C may be below 1.6 bar. If the boiling pressure of the fluid inside the battery unit is not sufficiently low, the direct contact necessitates lot of effort in the battery housing design to support the pressure. In this case, the pressure constraint is managed more easily by using cooling plates. In the case of a direct contact between the first refrigerant and the battery unit, R1233zd may be used which is a dielectric fluid and has boiling pressure of approximately 1.5 bar at 30°C.

An advantageous development of the solution according to the invention comprises an operation mode during which the first refrigerant within the first fluid circuit is in a liquid state and is heated by the heat exchanger. In this heating mode, the flow direction of the second refrigerant can be set in such a way that it first flows through the expansion valve and then through the heat exchanger or vice versa. The second refrigerant releases heat energy which is absorbed by the first refrigerant to heat the battery module. In contrast to other systems, this battery thermal management system can be operated in a heating or cooling heating mode.

An advantageous development of the solution according to the invention comprises at least one heater unit for heating up the battery unit. The heating unit can be an electrical heater mounted on the battery unit, for example. However, it may also be possible that the heater unit does not heat the battery unit directly, but is located between the conveying unit of the first fluid circuit and the battery unit to heat the first refrigerant resulting in an indirect heating of the battery unit. The advantage of this is that it is possible to heat the battery unit if the second fluid circuit fails or if the heating power of the second circuit is insufficient to achieve the desired temperature of the battery unit due to unexpected low outside temperatures. In addition, the heater unit is used to heat up the battery during cold start (for example < 0°C) to avoid any damage or lifetime degradation. Once the battery cells reach a temperature of 0°C, the heater unit may be turned off.

A further advantageous embodiment of the solution according to the invention comprises a third fluid circuit being thermally connected to the second fluid circuit by a second heat exchanger. Vehicles with several battery units can also have several cooling and/or heating circuits which are operated separately due to the position of the battery units in the vehicle.

In an advantageous development of the solution according to the invention, the heat exchanger and/or the second heat exchanger is an evaporative condenser providing an improved thermal coupling between the fluid circuits since the refrigerants are in two-phase state on both sides of the evaporative condenser.

In a further advantageous embodiment of the solution according to the invention, the second fluid circuit is an air conditioning system of the vehicle. The air conditioning system provides a sufficient low temperature source to absorbs all the heat dissipated by the battery unit and released by the first refrigerant inside the heat exchanger. By using an already existing air conditioning system, both production costs and the weight of the vehicle can be reduced.

In an advantageous development of the solution according to the invention, the second fluid circuit acts as a reversible heat pump. This allows the battery unit to be either heated or cooled by simply switching the flow direction of second refrigerant in the second fluid circuit.

A further advantageous embodiment of the solution according to the invention comprises at least one control unit and at least one temperature sensor for measuring the temperature of the battery unit and/or of the first refrigerant. Said control unit is communicatively connected to the temperature sensor, the conveying unit of the first fluid circuit and the conveying unit of the second fluid circuit.

A communicating connection means that a bidirectional or unidirectional data connection can be provided between two components that communicate with each other, with which electrical control, regulation and/or measurement signals can be transmitted in analog or digital form. Communication between more than two components can be realized with a bus system.

The control unit is designed and/or programmed to regulate the temperature of the battery unit so that the measured temperature remains within a predetermined temperature range. For this purpose, the control unit compares the measured temperature with the predetermined temperature range. If the measured temperature is outside of the temperature range, the control unit can, for example, adjust the pumping capacity of the conveying units to cause a temperature change in the desired direction. The predetermined temperature range may be from 15-40°C, especially from 15-25°C.

In an advantageous development of the solution according to the invention, the second fluid circuit comprises a HVAC (Heating, Ventilation and Air Conditioning) module providing a desired cabin air quality inside the vehicle, said HVAC module comprises a condenser unit and an evaporator unit. Additionally, the second fluid circuit comprises a control valve and an outside heat exchanger which can be located in the vehicle's front-end. The control valve may be a reversing valve that changes the direction of the second refrigerant flow. The condenser unit is used to heat a cabin of the vehicle while the evaporator unit is used to cool the cabin.

In a further advantageous embodiment of the solution according to the invention, the second fluid circuit has two modes of operation which include a cooling mode and a heating mode. During the cooling mode, the control valve is in a first position such that the outside heat exchanger acts as condenser while the heat exchanger and the evaporator unit act as evaporator. During the heating mode, the control valve is in a second position such that the outside heat exchanger acts as evaporator while the heat exchanger and the condenser unit act as condenser.

In an advantageous development of the solution according to the invention, the third fluid circuit recovers heat losses from electrical components of the vehicle leading to a better energy efficiency of the vehicle.

In a further advantageous embodiment of the solution according to the invention, the first fluid circuit comprises a receiver and/or the second fluid circuit comprises a receiver in which the excess refrigerant is stored.

In an advantageous development of the solution according to the invention, the first fluid circuit comprises a bypass system ensuring that only the liquid phase of the first refrigerant is fed into the conveying unit. In some cases, the first refrigerant at the receiver exit could be in a liquid-vapor mixture (two-phase state). This may happen, for instance, when the car was parked during hours in warm and sunny conditions. In order to protect the conveying unit against vapor, the bypass system is added. The bypass system may comprise a shut off valve, a pressure sensor and a temperature sensor which are positioned upstream of the conveying unit and downstream of the receiver. The bypass system may comprise a bypass line with one end of this bypass line being fluidically connected to the first fluid circuit between the shut off valve and the receiver while the other end this bypass line may be fluidically connected to the first fluid circuit between the battery unit and the heat exchanger. The bypass system may integrate a filter and a dryer to trap eventual impurities and humidity, respectively. A check valve may be added on the bypass line to not allow the fluid flow to bypass the heat exchanger.

In a further advantageous embodiment of the solution according to the invention, the first fluid circuit comprises a separator providing a separation of the gas phase and liquid phase of the first refrigerant. The separator may be a part of the receiver. The separator can be equipped by a return line for the vapor which is injected in the bypass line or/and in the first fluid circuit between the battery unit and the heat exchanger. The extraction of the vapor from the receiver can be accelerated by a fan which directs the vapor upstream the heat exchanger.

In an advantageous development of the solution according to the invention, the control unit is communicatively connected to the heater unit to improve the regulation of the temperature of the battery unit.

In a further advantageous embodiment of the solution according to the invention, the control unit is communicatively connected to the control valve. Due to this, the operation mode of the second fluid circuit can be controlled by the control unit.

Further important features and advantages of the invention emerge from the dependent claims, from the drawings and from the associated description of the figures with reference to the drawings.

It goes without saying that the features mentioned above and those which have yet to be explained below can be used not only in the respectively stated combination, but also in different combinations or on their own without departing from the scope of the present invention.

Preferred exemplary embodiments of the invention are illustrated in the drawings and are explained in more detail in the description below, wherein the same reference signs refer to identical or similar or functionally identical components.

In the drawings, in each case schematically,
- Fig. 1: shows a battery thermal management system according to the invention with a first fluid circuit and a second fluid circuit being thermally connected,
- Fig. 2: shows a battery thermal management system according to the invention with a second fluid circuit acting as a reversible heat pump which is shown in a cooling mode,
- Fig. 3: shows a battery thermal management system according to the invention with a second fluid circuit acting as a reversible heat pump which is shown in a heating mode,
- Fig. 4: shows a battery thermal management system according to the invention with a first fluid circuit comprises a bypass system,
- Fig. 5: shows a battery thermal management system according to Fig. 4 with a second fluid circuit acting as a reversible heat pump,
- Fig. 6: shows another battery thermal management system according to Fig. 4 with a second fluid circuit acting as a reversible heat pump.

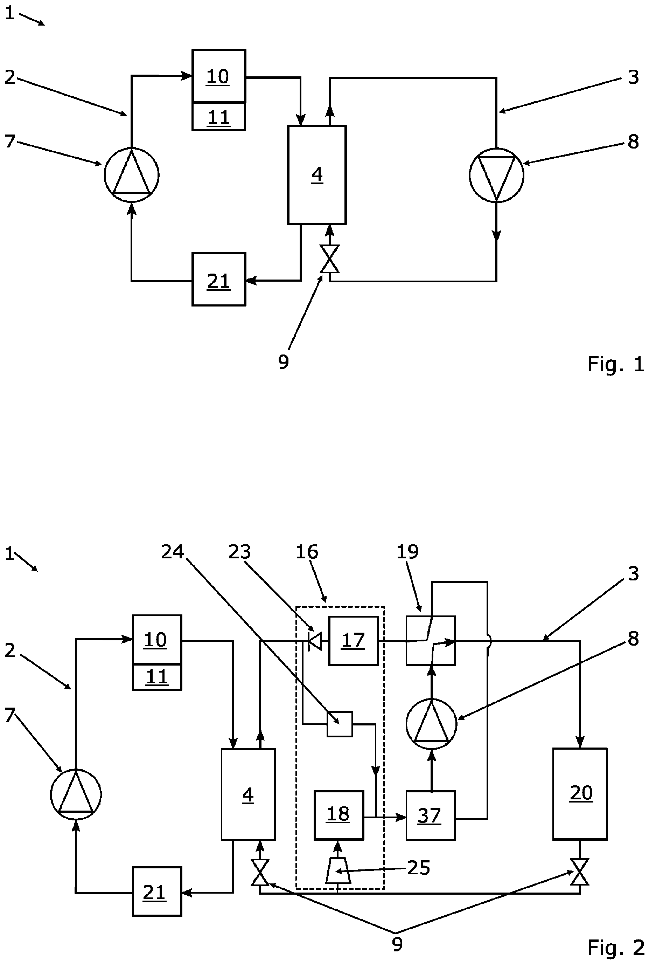

According to Fig. 1, a battery thermal management system 1 according to the invention, which can be used in a vehicle, has at least a first fluid circuit 2 and a second fluid circuit 3 that are thermally connected by at least one heat exchanger 4. The first fluid circuit 2 comprises an electrically non-conductive, two-phase first refrigerant 5 that is driven within the first fluid circuit 2 by at least one electrically driven conveying unit 7. The second fluid circuit 3 comprises a two-phase second refrigerant 6 that is driven by at least one electrically driven conveying unit 8. The arrows in the fluid circuits indicate the direction of flow of the respective refrigerant.

Additionally, the second fluid circuit 3 comprises least one expansion valve 9 removing pressure from the second refrigerant 6 allowing an expansion or change of state from a liquid to a vapor within heat exchanger 4. In this case, a flow direction of the second refrigerant 6 is required, in which the second refrigerant 6 first flows through the expansion valve 9 and then through the heat exchanger 4. The expansion valve 9 may be an electrical expansion valve.

The first fluid circuit 2 comprises at least one battery unit 10 of the vehicle being fluidically connected to the first fluid circuit 2, said battery unit 10 may comprises several battery cells which are not shown in the figures. The battery cells may be arranged in a battery housing which is fluidically connected to the first fluid circuit 2. A heater unit 11 is either arranged on or integrated in the battery unit 10. Additionally, the first fluid circuit 2 comprises a receiver 21 where an excess of the first refrigerant 5 is stored. The first refrigerant 5 is in a liquid state in the receiver 21.

The conveying unit 7 draws the liquid first refrigerant 5 from the receiver 21 and pumps it to the battery unit 10. At the entrance of the battery unit 10, the first refrigerant 5 is still in a liquid state resulting in homogeneous distribution of the first refrigerant 5 through the battery unit 10. While the first refrigerant 5 flows along the battery unit 10, it absorbs the heat released by the battery cells rising its temperature till reaching saturation. Then, the first refrigerant 5 starts to evaporate. The refrigerant 5 leaves the battery unit 10 fully vaporized or still in two-phase. Thus, the battery unit 10 acts as an evaporator and transfers its heat energy to the first refrigerant 5 converting it at least into a two-phase state.

The first refrigerant 5 in the two-phase state flows to the heat exchanger 4. The liquid second refrigerant 6 is first pumped through the expansion valve 9 and changes its state from liquid to vapor within heat exchanger 4. The heat exchanger 4 may be an evaporative condenser providing an improved thermal coupling between the fluid circuits since the refrigerants are in two-phase state on both sides of the heat exchanger 4.

Inside the heat exchanger 4, the first refrigerant 5 condenses and releases the previously absorbed heat energy of the battery unit 10. Simultaneously, the second refrigerant 6 absorbs the heat energy released by the first refrigerant 5. Due to this, the second refrigerant 6 vaporizes. Downstream of the heat exchanger 4, the liquid first refrigerant 5 flows into the receiver 21.

In this embodiment of the invention, the second fluid circuit 3 may be an air conditioning system of the vehicle. In this case, the battery unit 10 is cooled by the first refrigerant 5 while it is heated by the heater unit 11 if required.

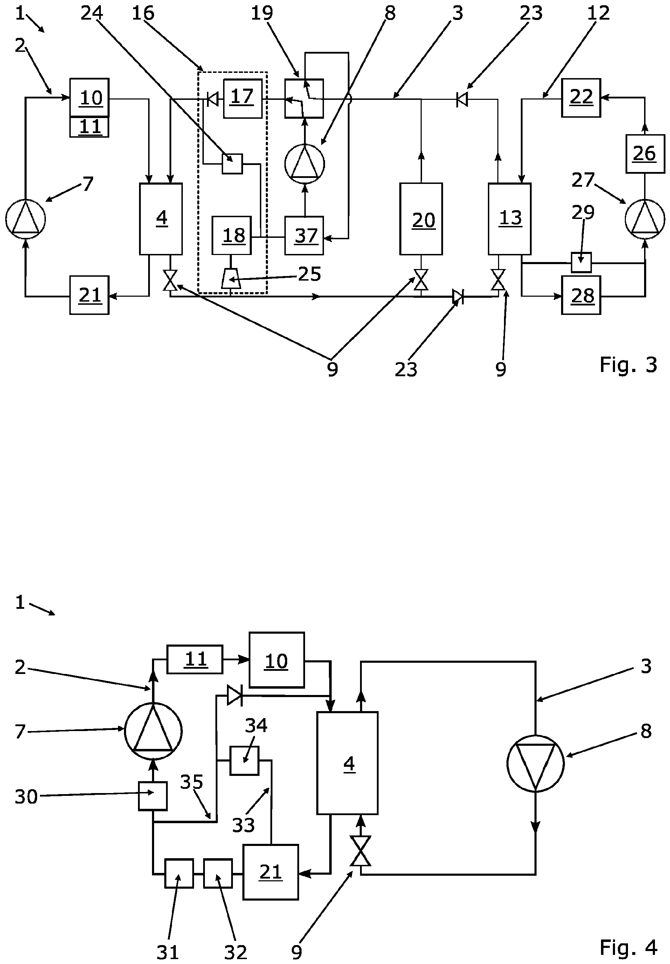

Fig. 2 shows a battery thermal management system 1 according to the invention with a second fluid circuit 3 acting as a reversible heat pump. Thus, the battery unit 10 can be cooled as well as heated by the first refrigerant 5. The second fluid circuit 3 has two modes of operation which include a cooling mode and a heating mode. The configuration of battery thermal management system 1 in the cooling mode is shown in Fig. 2 while the configuration in the heating mode is shown in Fig. 3.

The second fluid circuit 3 comprises a HVAC module 16 providing a desired cabin air quality inside the vehicle, said HVAC module 16 comprises a condenser unit 17 and an evaporator unit 18. The condenser unit 17 is used to heat a cabin of the vehicle while the evaporator unit 18 is used to cool the cabin. Additionally, the second fluid circuit comprises a control valve 19, a shutoff valve 24, a receiver 37 and an outside heat exchanger 20. An expansion valve 9 is installed downstream of the outside heat exchanger 20 while an orifice tube 25 with shut off with function is located upstream of the evaporator unit 18. The expansion valves 9, the shutoff valve 24 and the orifice tube 25 may be driven electrically. The control valve 19 may be a reversing valve and/or a four-way valve that changes the direction of the second refrigerant flow.

During the cooling mode, the control valve 19 is in a first position such that the outside heat exchanger 20 acts as condenser while the heat exchanger 4 and the evaporator unit 18 act as evaporator. The shutoff valve 24 and the orifice tube 25 are open in this operation mode. The second refrigerant 6 in the receiver 37 is in a two-phase state and the conveying unit 8 pumps it to the outside heat exchanger 20. The second refrigerant 6 condenses in the outside heat exchanger 20 and flows to the heat exchanger 4 as well as to the evaporator unit 18. In both cases, the liquid second refrigerant 6 is at least piratically vaporized and flows into the receiver 37.

Fig. 3 shows a battery thermal management system 1 according to the invention with a second fluid circuit acting as a reversible heat pump which is shown in a heating mode. Additionally, there is a third fluid circuit 12 used to recover heat waste a motor 26 and of electrical components 22 of the vehicle. The third fluid circuit 12 comprises a conveying unit and a low-temperature radiator 28. There is a bypass comparing a shutoff valve 29. The second fluid circuit 3 and the third fluid circuit 12 are thermally connected by a second heat exchanger 13. Within the third fluid circuit 12 a coolant (water/glycol mixture) may be used to cool the electrical components 22 of the vehicle such as motor, inverter, etc.

In addition, the second fluid circuit 3 comprises two one-way valves 23 and an expansion valve 9 upstream of the second heat exchanger 13.

During the heating mode, the control valve 19 is in a second position such that the outside heat exchanger 20 acts as evaporator while the heat exchanger 4 and the condenser unit 17 act as condenser. The shutoff valve 24 and the orifice tube 25 are closed in this operation mode. The second refrigerant 6 in the receiver 37 is in a two-phase state and the conveying unit 8 pumps it to the condenser unit 17 where it partially condenses. Then, the second refrigerant 6 flows to the heat exchanger 4 and continues to condense. In the next step, the second refrigerant 6 is distributed between the outside heat exchanger 20 and the second heat exchanger 13 both acting as evaporator. Thus, the second refrigerant 6 evaporates by absorbing the heat dissipated by the coolant.

In contrast to a battery thermal management system 1 shown in Fig. 1, the first fluid circuit 2 of the battery thermal management system 1 shown in Fig. 4 comprises a bypass system ensuring that only the liquid phase of the first refrigerant 5 is fed into the conveying unit 7. The bypass system comprises a shut off valve 30, a pressure sensor 31 and a temperature sensor 32 which are positioned upstream of the conveying unit 7 and downstream of the receiver 21. The pressure and temperature sensors are used to determine the phase of the first refrigerant 5. The bypass system comprises a bypass line 35 with one end of this bypass line 35 being fluidically connected to the first fluid circuit 2 between the shutoff valve 30 and the receiver 21 while the other end this bypass line 35 may be fluidically connected to the first fluid circuit 2 between the battery unit 10 and the heat exchanger 4. The the first fluid circuit 2 and/or the bypass system may integrate a filter and a dryer to trap eventual impurities and humidity, respectively. A check valve may be added on the bypass line to not allow the fluid flow to bypass the heat exchanger.

If the refrigerant is in two-phase state, the shutoff valve 30 is closed which forces the first refrigerant 5 to follow the bypass line 35. Subsequently, the liquid-vapor mixture is cooled down by the heat exchanger 4 in which the vapor condenses. After one or two bypass cycles, the first refrigerant 5 is fully liquid downstream of the receiver 21 and the shutoff valve 30 is open allowing the conveying unit 7 to draw the first refrigerant 5 to cool down the battery unit 10.

The receiver 21 may comprise a separator providing a separation of the gas phase and liquid phase of the first refrigerant. In this case, the receiver 21 is equipped by a return line 33 for the vapor which is injected in the bypass line 35. The extraction of the vapor from the receiver 21 is accelerated by a fan 34 which directs the vapor upstream the heat exchanger.

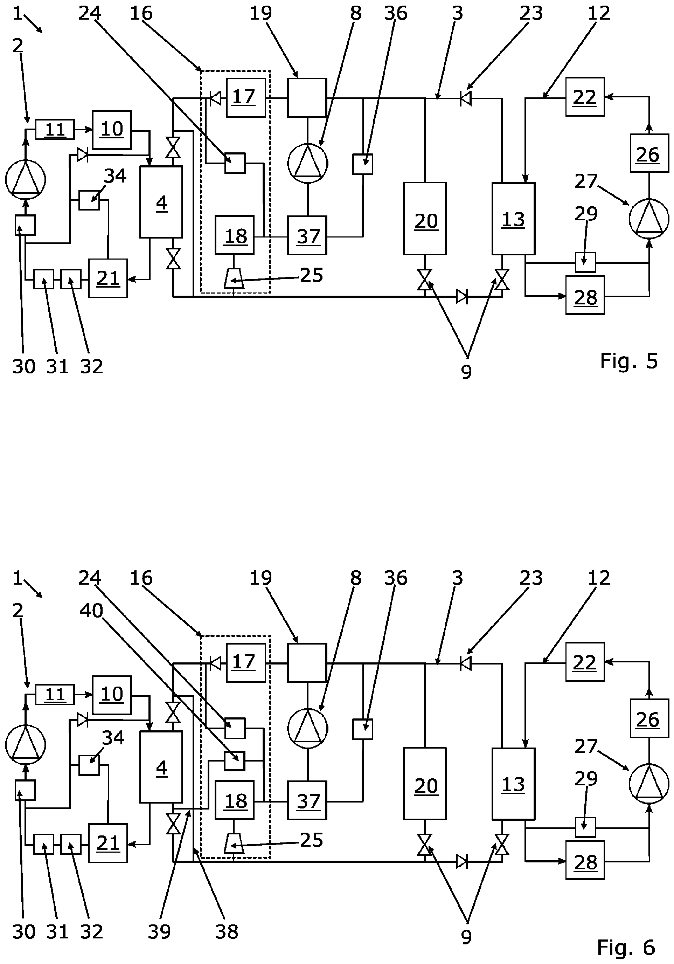

Fig. 5 shows a battery thermal management system 1 according to Fig. 4 with a second fluid circuit 3 acting as a reversible heat pump. In contrast to the second fluid circuit 3 shown in Fig. 3, the second fluid circuit 3 shown in Fig. 5 has a control valve 19 which is a three-way valve. Additionally, the second fluid circuit 3 comprises a second shutoff valve 36 and two expansion valves between which the heat exchanger 4 is arranged.

During the cooling mode, the control valve 19 is in a first position such that the outside heat exchanger 20 acts as condenser while the heat exchanger 4 and the evaporator unit 18 act as evaporator. In this operation mode, the shutoff valve 36 is closed while the shutoff valve 24 is open. The second refrigerant 6 in the receiver 37 is in a two-phase state and the conveying unit 8 pumps it to the outside heat exchanger 20.

During the heating mode, the control valve 19 is in a second position such that the outside heat exchanger 20 acts as evaporator while the heat exchanger 4 and the condenser unit 17 act as condenser. In this operation mode, the shutoff valve 24 is closed while the shutoff valve 36 is open. The second refrigerant 6 in the receiver 37 is in a two-phase state and the conveying unit 8 pumps it to the condenser unit 17 where it partially condenses.

Fig. 6 shows another battery thermal management system 1 according to Fig. 4 with a second fluid circuit 3 acting as a reversible heat pump. During the heating mode, once the temperature of the battery unit reaches the desired value, the heat exchanger 4 acts as an evaporator to recover the heat released by the battery unit. In this case the second refrigerant 6, leaving the conveying unit 8, is directed to the condenser 17 then a portion is admitted in the heat exchanger 4. This fluid portion leaves the heat exchanger 4 and follows the line 39 where a shutoff valve 40 is installed and it is open to allow the fluid to go to the receiver 37. The other portion of the second refrigerant 6 follows the line 38 towards the outside heat exchanger 20 and eventually the heat exchanger 13 both act as an evaporator.

The battery thermal management system 1 may comprises a control unit 14 and a temperature sensor 15 which are not shown for the sake of clarity. The control unit 14 can be communicatively connected to all components of the battery thermal management system 1. The control unit 14 may be used to operate the battery thermal management system 1, said control unit 14 being designed and/or programmed in such a way that it controls/operates the system in the described manner.

## Claims

1. A battery thermal management system for a vehicle comprising:
- a first fluid circuit (2) and a second fluid circuit (3) being thermally connected by at least one heat exchanger (4),
- a two-phase first refrigerant (5) within the first fluid circuit (2) and a two-phase second refrigerant (6) within the second fluid circuit (3),
- at least one electrically driven conveying unit (7) fluidically connected to the first fluid circuit (2) for driving the first refrigerant (5) within the first fluid circuit (2),
- at least one electrically driven conveying unit (8) fluidically connected to the second fluid circuit (3) for driving the second refrigerant (6) within the second fluid circuit (3),
- at least one expansion valve (9) in the second fluid circuit (3),
- at least one battery unit (10) of the vehicle being fluidically connected to the first fluid circuit (2), said battery unit (10) is arranged downstream of the conveying unit (7) and upstream of the heat exchanger (4), said battery unit (10) is at least partially in thermal contact with the first refrigerant (5),
- an operation mode during which:
- the first refrigerant (5) within the first fluid circuit (2) is in a liquid state or at least partially in a liquid state between the conveying unit (7) and the battery unit (10), the battery unit (10) acts as an evaporator and transfers its heat energy to the first refrigerant (5) converting it at least into a two-phase state,
- subsequently, the first refrigerant (5) of the first fluid circuit (2) is condensed in the heat exchanger (4) while the second refrigerant (6) of the second fluid circuit (3) is evaporated.

2. The battery thermal management system according to claim 1,
wherein during the operation mode the inlet temperature of the first refrigerant (5) at the entrance of the battery unit (10) is higher than 10°C.

3. The battery thermal management system according to claim 1 or 2,
wherein the battery unit (10) is at least partially in direct contact with the first refrigerant (5) having a boiling pressure below 2 bar at a temperature of 30°C.

4. The battery thermal management system according to any one of the preceding claims,
further comprising an operation mode during which the first refrigerant (5) within the first fluid circuit (2) is in a liquid state and is heated by the heat exchanger (4).

5. The battery thermal management system according to any one of the preceding claims,
further comprising at least one heater unit (11) for heating up the battery unit.

6. The battery thermal management system according to any one of the preceding claims,
- further comprising a third fluid circuit (12) being thermally connected to the second fluid circuit (3) by a second heat exchanger (13), and/or
- wherein the heat exchanger (4) and/or the second heat exchanger (13) is an evaporative condenser.

7. The battery thermal management system according to any one of the preceding claims,
- wherein the second fluid circuit (3) is an air conditioning system of the vehicle, and/or
- wherein the second fluid circuit (3) acts as a reversible heat pump.

8. The battery thermal management system according to any one of the preceding claims, further comprising
- at least one control unit (14),
- at least one temperature sensor (15) for measuring the temperature of the battery unit (10) and/or of the first refrigerant (5),
- said control unit (14) is communicatively connected to the temperature sensor (15),
- said control unit (14) is communicatively connected to the conveying unit (7) of the first fluid circuit (2),
- said control unit (14) is communicatively connected to the conveying unit (8) of the second fluid circuit (3),
- said control unit (14) is designed and/or programmed to regulate the temperature of the battery unit so that the measured temperature remains within a predetermined temperature range.

9. The battery thermal management system according to any one of the preceding claims,
wherein
- the second fluid circuit (3) comprises a HVAC module (16) providing a desired cabin air quality inside the vehicle, said HVAC module (16) comprises a condenser unit (17) and an evaporator unit (18),
- the second fluid circuit comprises a control valve (19) and an outside heat exchanger (20).

10. The battery thermal management system according to Claim 10,
wherein the second fluid circuit (3) has two modes of operation which include a cooling mode and a heating mode, wherein
- during the cooling mode, the control valve (19) is in a first position such that the outside heat exchanger (20) acts as condenser while the heat exchanger (4) and the evaporator unit (18) act as evaporator,
- during the heating mode, the control valve (19) is in a second position such that the outside heat exchanger (20) acts as evaporator while the heat exchanger (4) and the condenser unit (17) act as condenser.

11. The battery thermal management system according to any one of claims 5 through 11,
wherein the third fluid circuit (12) recovers heat losses from electrical components of the vehicle.

12. The battery thermal management system according to any one of the preceding claims,
wherein the first fluid circuit (2) comprises a receiver (21) and/or the second fluid circuit (3) comprises a receiver (37).

13. The battery thermal management system according to any one of the preceding claims,
wherein the first fluid circuit (2) comprises a bypass system ensuring that only the liquid phase of the first refrigerant (5) is fed into the conveying unit (7).

14. The battery thermal management system according to any one of the preceding claims,
wherein the first fluid circuit (2) comprises a separator providing a separation of the gas phase and liquid phase of the first refrigerant (5).

15. The battery thermal management system according to any one of the preceding claims,
wherein the control unit (14) is communicatively connected to the heater unit (11).
